# EUROPEAN PATENT APPLICATION

(11) **EP 2 196 103 A1**
(43) Date of publication of application: **16.06.2010**
(21) Application number: 08171678.9
(22) Date of filing: 15.12.2008
(51) Int. Cl.: A44C 17/02, G02C 11/02

(54) **Jewelry article for a lens of eyeglasses and a jewel-installation tool for a pair of eyeglasses**

(71) Applicant: Crossfor Co., Ltd., Kouhu Yamanashi 400-0862 (JP)
(72) Inventor: Dobashi, Hidetaka Crossfor Co., Ltd., Yamanashi 400-0862 (JP)
(74) Representative: Bergquist, Kjell Gunnar

(57) **Abstract**

When using this jewelry article for eyeglasses, the base is positioned on a front surface of a lens of the pair of eyeglasses, and the rear surface magnet is set on the rear surface of the lens on a relative position to the base. Then, the lens is tucked by a magnetic force generated between the base and the rear surface magnet, and the base and the rear surface magnet are positioned in a stable state on a desired position on the surface of the lens. Therefore, the main body of a jewel can be mounted on the lens.

## Description

### FIELD OF INVENTION

The present invention relates to a jewelry article to be put on a lens of eyeglasses.

### BACKGROUND OF THE INVENTION

In recent years eyeglasses are requested for not only a function but also high ornamental character. Accordingly, for instance; there is a technology to fix jewelry on a lens besides various decorations are given on an eyeglass frame.
This technology is, for example; a hole is pierced in a lens and a metal fitting is fixed to the hole, and jewelry is fixed on the metal fitting.

### OBJECTIVES OF THE INVENTION

### [Problems to be solved by this invention]

However, the conventional jewelry for eyeglasses mentioned above has a problem, such as time-consuming of a process for piercing a hole on a lens. Also, there is another problem, such as declining the strength of the lens of eyeglasses by piercing a hole on a lens.

In view of the problems above mentioned, the objective of this invention is to provide a jewelry article for a lens of eyeglasses and a jewel-installation tool for a pair of eyeglasses which can be mounted on a lens with less time-consuming and without declining the strength of the lens.

### [Means to solve the problems]

To solve the conventional problems mentioned above and achieve the objective mentioned above, a jewelry article for eyeglasses of this invention of the first perspective is a jewelry article to be mounted on a lens of eyeglasses. It comprises a base positioned on a front surface of a lens, a main body of a jewel fixed on the base and a part held by a magnetic force generated between the base and the part at a position relative to the base, the part positioned on a rear surface of the lens.

By the jewelry article for eyeglasses of this invention of the first perspective, the base is set on a desired position on a front surface of a lens of eyeglasses, and a part is held on a relative position attracting to the base on the front surface of the lens. Then, the base and the part are pushed by a magnetic force generated between the base and the part. As a result, the base and the part are held on the lens by friction generated from the magnetic force. When using this invention, a jewelry article can be held on a lens without piercing a hole on a lens. Therefore, time-consuming can be much less as compared to the conventional way when producing and mounting this jewelry article. Moreover, the exterior of the lens is not marred when not using the jewelry article, since there is no hole on the lens. In addition, the strength of the lens is not declined, since any hole is not pierced on the lens.

The base of the jewelry article for eyeglasses of this invention of the first perspective preferably comprises a cylindrical shape, and prong settings are installed along a rim of the base; And the main body of a jewel shaped like an approximately triangular pyramid and includes a point held in midair through the orifice of the base; and a bottom surface of an outer circumference of the main body of the jewel is held by the prong settings in the base. The base of the jewelry article for eyeglasses of this invention of the first perspective preferably comprises a cylindrical shape, and prong settings are installed along the rim of the base; a ring shaped permanent magnet formed inside of a bottom of the base; the main body of the jewel shaped like an approximately triangular pyramid and includes a point positioned in a midair on the permanent magnet; and a bottom of an outer circumference of the main body of the jewel is held by the prong settings in the base.

A permanent magnets attracting mutually by the magnetic force are preferably installed in each of the base and the part of this invention of the first perspective. Either one of the base or the part of this invention of the first perspective includes preferably a permanent magnet; or the other includes preferably a ferromagnetic.

The part of the jewelry article for eyeglasses of this invention of the first perspective has preferably an adhesive layer to position the part on a rear side of the lens at a position relative to the base. A plurality of the bases mentioned above of the jewelry article for eyeglasses of this invention of the first perspective is preferably held by a magnetic force generated between the singular part and the plurality of bases.

A jewel-installation tool for a pair of eyeglasses of this invention of the second perspective is an installation tool for a pair of eyeglasses to put a jewel on a lens of eyeglasses, comprising: a base to be positioned on a front surface of the lens and to fix the main body of a jewel; and the main body of a jewel fixed on the base; and the part held by a magnetic force generated between the part and the base at a position relative to the base, on the part positioned a rear surface of the lens.

### [Effect of this invention]

This present invention can provide a jewelry article for a lens of eyeglasses and a jewel-installation tool for a pair of eyeglasses, which can be mounted on a lens with less time-consuming and without declining the strength of the lens.

### BRIEF DESCRIPTION OF THE DRAWINGS

FIGS.1A, 1B and 1C illustrate external figures of the base of a jewelry article for eyeglasses of the first embodiment of this invention, on which a main body of a jewel is set.
FIGS.2A and 2B illustrate external figures of the rear surface magnet of a jewelry article for eyeglasses of the first embodiment of this invention.
FIG.3 illustrates a cross sectional structure to show the jewelry article for eyeglasses illustrated in the FIGS.1A, 1B and 1C mounted on a lens of eyeglasses.
FIG.4 illustrates an external figure to show the jewelry article for eyeglasses of the first embodiment of this invention mounted on the pair of eyeglasses FIG.5 illustrates the jewelry article for eyeglasses of the second embodiment of this invention.
FIG.6 illustrates a cross sectional figure of the jewelry article for eyeglasses of the third embodiment of this invention.
FIG.7 illustrates a cross sectional figure of the jewelry article of the forth embodiment of this invention.
FIG.8 illustrates a cross sectional figure of a jewelry article of the other embodiment of this invention.
FIG.9 illustrates a cross sectional figure of a jewelry article of the other embodiment of this invention.

### DETAILED DESCRIPTION OF THE INVENTION

### [The preferred embodiment of this invention]

The jewelry article related to the embodiment of this invention will be better understood from referring the following drawings.

### <The first embodiment of this invention>

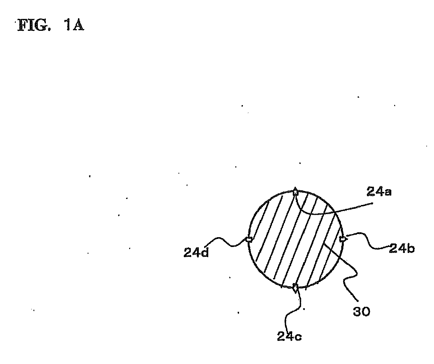

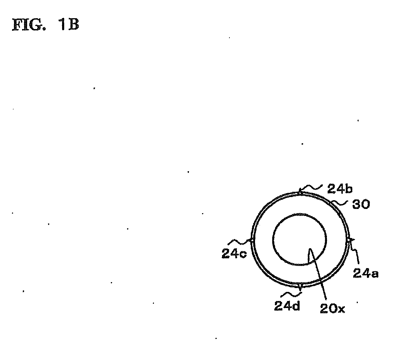

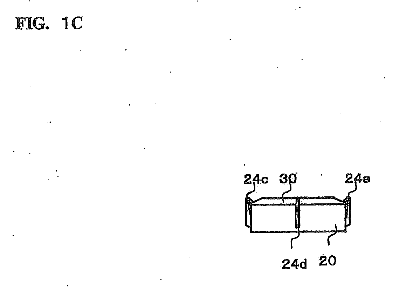

FIGS.1A, 1B and 1C illustrate external figures of the base 20 set in a main body of a jewel 30 of the first embodiment of this invention of the jewelry article for eyeglasses 1; FIG.1A illustrates a front view; FIG.1B illustrates a rear view, and FIG.1C illustrates a side lateral view.

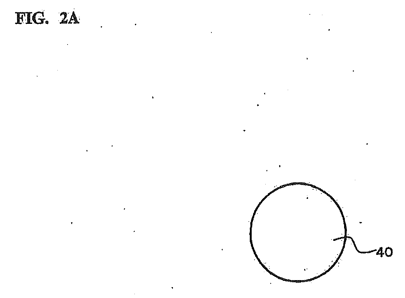

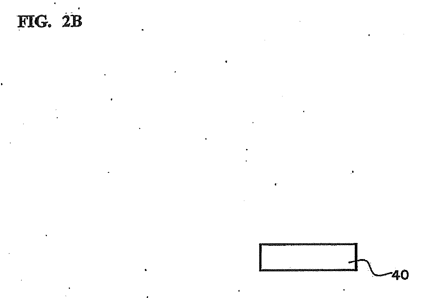

FIGS.2A and 2B illustrate external figures of the rear surface magnet 40 of the jewelry article for eyeglasses; FIG.2A illustrates a front view; FIG.2B illustrates a side lateral view.

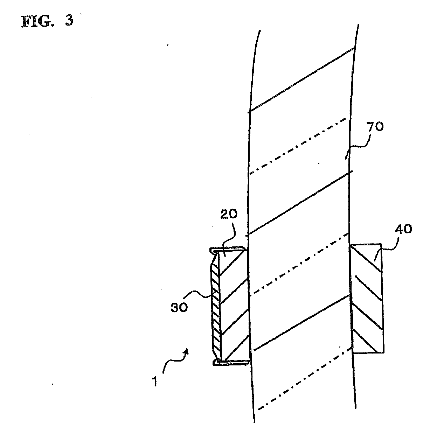

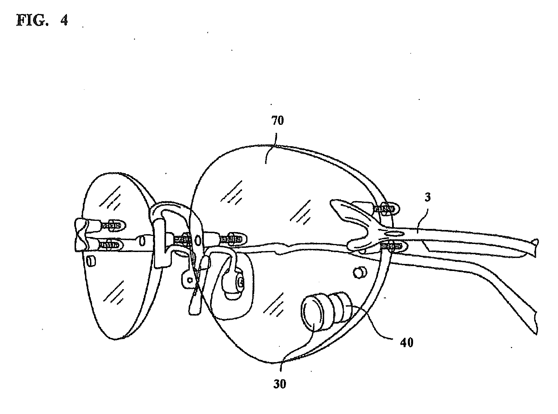

FIG.3 illustrates a cross sectional structure in a state of that the jewelry article for eyeglasses 1 illustrated in the FIGS.1A, 1B and 1C is mounted on the pair of eyeglasses 3. FIG.4 illustrates an external figure in a state of that the jewelry article for eyeglasses 1 is mounted on the pair of eyeglasses 3. As illustrated in FIGS.1A - 4, a jewelry article for eyeglasses 1 comprising, for example; a base 20, a main body of a jewel 30, and rear surface magnet 40. The base is formed of a ferromagnetic substance such as iron, cobalt and nickel etc. Herein, the base 20 is an example for a base of this invention, the main body of a jewel 30 is an example for a main body of a jewel of this invention, and the rear surface magnet 40 is an example for a part of this invention.

The jewelry article 1 for eyeglasses has the base 20 on a front surface of the lens of eyeglasses and the rear surface magnet 40 on a rear surface of the lens confronting with the base 20. Therefore, the lens is tucked by the magnetic force generated between the base 20 and the rear surface magnet 40, and the base 20 and the rear surface magnet 40 are positioned on a desired position in a stable state on the surface of the lens. As a result, the main body of a jewel 30 can be put on the lens.

Each component of the jewelry article 1 for eyeglasses is explained in detail as followings. As illustrated in FIGS.1A and 1B, the base 20 of the jewelry article 1 for eyeglasses is for example, almost cylindrical. As illustrated in FIGS.1A,1B, and 4 prong settings, 24a, 24b, 24c, and 24d are installed at regular space along the rim of the base 20 to hold the main body of a jewel 30 that is a diamond.
The thickness of the base 20 is for example, approximately 1.5mm.

A diamond is cut usually approximately conic; therefore, its apex side should be mounted in the orifice 20x of the base 20 as shown in the FIGS.1A, 1B and 1C. As a result, the entire thickness of the base 20 and the main body of a jewel 30 can be thin, and its design can be superior. It is still illustrated that a diamond as the main body of a jewel 30 is hold by 4 prong settings 24a, 24b, 24c, and 24d in this embodiment, yet more or less than 4 prong settings may be formed. Alternatively, the main body of a jewel 30 may be another material besides a diamond. The structure to hold the main body of a jewel 30 on the base 20 is properly selected according to every variety of the main body of a jewel 30.

In this embodiment, it is illustrated that the base 20 is formed by a ferromagnetic force, and a permanent magnet is not hold in the base 20. However, a permanent magnet, which attracts the rear surface magnet 40 by a magnetic force each other, may be also hold in the base 20. Alternatively the base 20 itself may be formed by a permanent magnet.

As FIGS. 2A and 2B shows, the rear surface magnet 40 is a permanent magnet and for example, a disk shape having the outside diameter as same as the base 20. In addition, in the case of that the base 20 itself is formed by a permanent magnet or a permanent magnet is hold in the base 20, a part of a ferromagnetic force may be used instead of the rear surface magnet 40.
Further more, in the case of that a permanent magnet is hold in the base 20, the base 20 may be molded by resin etc.

It is explained a manner how to place a jewelry article 1 for eyeglasses as followings. As shown in the FIG.3 and FIG.4, a user places the base 20 on a desired position on a front surface of the lens 70 of eyeglasses so that the main body of a jewel 30 is located on the front side. Then, keeping the state above mentioned, the user positions a side of the rear surface magnet 40 relatively to the base 20 on the front surface of the lens 70 of eyeglasses, whereby a magnetic force functions in a direction of attracting each other between the rear surface magnet 40 and the base 20. Concretely, when a side of the base 20 met a front surface of a lens is the south pole of a magnet, a side of the north pole of the rear surface magnet 40 is met a rear surface of the lens. On the other hand, when a side of the base 20 met a front surface of a lens is the north pole of a magnet, a side of the south pole of the rear surface magnet 40 is met a rear surface of the lens.

As a result, the base 20 and the rear surface magnet 40 are attracting each other by a magnetic force through the lens 70 of eyeglasses and sufficient friction is generated between the base 20 and the front surface of a lens and the rear surface magnet 40 and the rear surface of the lens to keep the position of the base 20 and the rear surface magnet 40 against gravity respectively.

When using the jewelry article 1 for eyeglasses, the base 20 and the rear surface magnet 40 strongly attract each other by a magnetic force. Therefore, the main body of a jewel 30 is held on the lens 70 stably and resists falling even if there would be any impact.

When using the jewelry article 1 for eyeglasses, the main body of a jewel 30 can be held on the lens 70 without piercing a hole etc. on the lens 70. Therefore, time-consuming to mount the main body of a jewel 30 can be much reduced in comparison with a conventional way. Still, the exterior of the lens 70 is not marred when not mounting the main body of a jewel 30, since any hole is not pierced on the lens 70. Further more, the strength of the lens 70 does not decline, since any hole is not pierced on the lens 70.

### <The second embodiment of this invention>

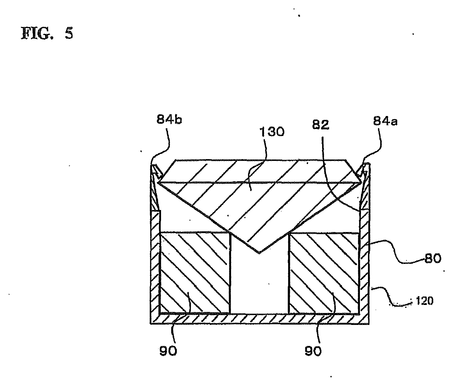

It was illustrated that the base 20 itself was formed like a ring in the first embodiment mentioned above. The base 120 of this embodiment has a bottom cylindrical body 80 as cross sectional structure illustrated in FIG.5, having prong settings, 84a and 84b along the rim of the orifice 82. The number of the prong settings is for example, four, and the prong settings are disposed at a regular stance along the rim. A ring shaped permanent magnet 90 is held in the inside of the bottom cylindrical body 80. A main body of a jewel 130 shaped like an approximately triangular pyramid (for example; a diamond) is held in the side of the orifice of the bottom cylindrical body 80, and the point of a main body of a jewel 130 is located in the midair part of the permanent magnet 90, and the circumference of the bottom surface of the main body of a jewel 130 is held in the base 120 by the prong settings mentioned above. A manner of forming the base 120 is that 4 prong settings including 84a and 84b are installed by a heat-treatment around the rim of the orifice 82, after forming a bottom cylindrical body 80. Then, the ring shaped permanent magnet 90 is pressed into the bottom of the bottom cylindrical body 80 in the state of that the pertinent prong settings are pressed out to the outside, and is held in the bottom inside of the bottom cylindrical body 80. Then, the main body of a jewel 130 shaped like an approximately triangular pyramid is pressed into the inside of the bottom cylindrical body 80 from its point through the orifice 82. Then, the main body of a jewel 130 is held in the bottom cylindrical body 80 locating the point of the main body of a jewel 130 in the midair part of the permanent magnet shaped like a ring. The bottom of the main body of a jewel 130 is held by the pertinent 4 prong settings, so that the main body of a jewel 130 does not come out to the outside of the bottom cylindrical body 80. In this embodiment, the permanent magnet 90 is placed after forming and installing the bottom cylindrical body 80 and the prong settings. Therefore, the permanent magnet is not treated by high heat, and a decline of the magnetic force of the permanent magnet 90 can be evaded.

### <The third embodiment of this invention>

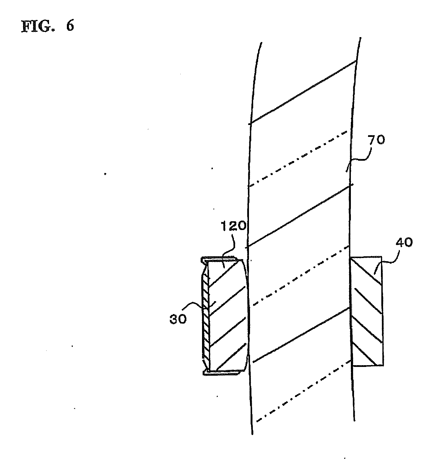

FIG.6 is a cross sectional figure to explain a jewelry article of eyeglasses of the embodiment of this invention. As illustrated in FIG.6, the bottom surface of the base 120 touched to a lens 70 is gently curvilinear convex. As a result, the base 120 is rotatable in a center of a juncture between the base 120 and a lens 70, when a rotary motion is added by fingers etc. in a state of that the base 120 is placed by a magnetic force generated between the base 120 and the rear surface magnet 40 on the lens 70. Thus, the base 120 is rotatable, so that the ornamental effect of this jewelry article for eyeglasses can be increased.

### <The forth embodiment of this invention>

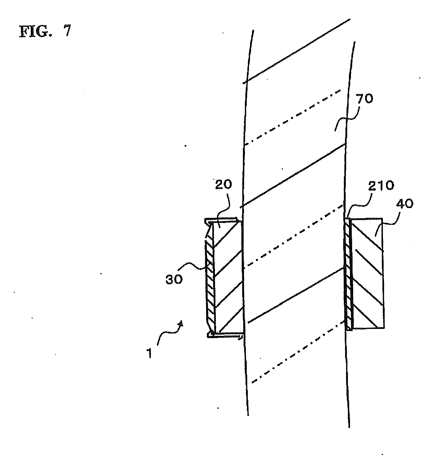

FIG.7 is a cross sectional figure to explain a jewelry article of eyeglasses of the fourth embodiment of this invention. As illustrated in FIG.7, a rear surface magnet 40 is held in a set position of the rear surface of the lens 70 through an adhesive sheet or an adhesive 210 in this embodiment. The base 20 may be, for example, as same as the first embodiment. The rear surface magnet 40 is held on the lens 70 like this, thus it can prevent that the rear surface magnet 40 is shifted.

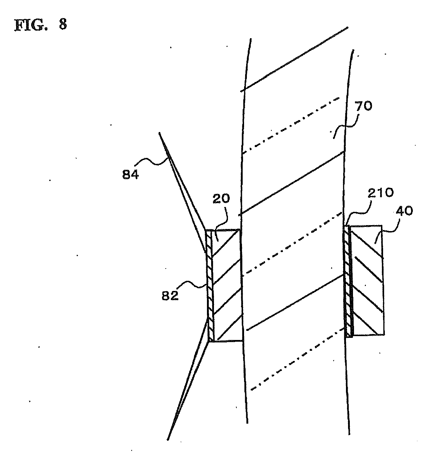

This jewelry article of eyeglasses of this embodiment can exercise strong effect of ornamentation. This invention is not limited in the embodiment mentioned above. Namely, regarding the component in the embodiment mentioned above, a person skilled in the art can do various changes, combination, sub-combination, and substitution in the technical or equivalent of this invention. In the embodiment mentioned above, it was illustrated that a diamond shaped like a triangular pyramid was used as the main body of a jewel 30, yet another jewel 84 may be put on the base 20 through an adhesive layer 82 besides a diamond as illustrated in FIG.8.

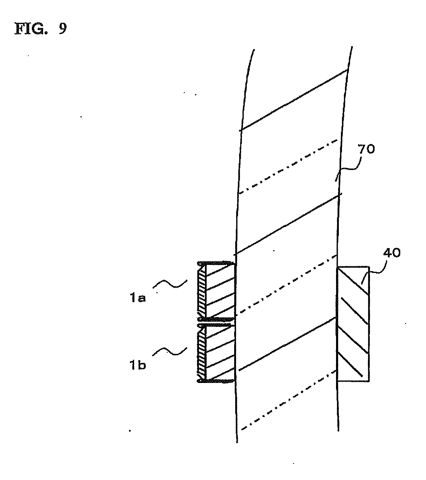

In addition, as illustrated in FIG.9, sizes of each jewelry article may be fixed to hold more than one jewelry article of eyeglasses such as 1a and 1b by a magnetic force against one rear surface magnet 40. Therefore, diverse design can be formed in a combination of plural jewelry articles. Also, it was illustrated in the embodiment mentioned above that the base 20 was formed like a ring; however, the base may be formed in another form besides a ring. Further more, it was illustrated in the embodiment mentioned above that a permanent magnet was used as the base 20 and the rear surface magnet 40 mutually, however, either one may be a permanent magnet and another one a ferromagnetic force. In the above mentioned embodiment, it was illustrated that the invention was practiced by one module of a function of the base and a function of the magnet, yet in this embodiment of the invention it is practiced by different modules of these functions.

### INDUSTRIAL USE POSSIBILITY

This invention is applicable for placing jewelry on a lens of eyeglasses.

## Claims

1. A jewelry article for mounting on a lens of eyeglasses, comprising:
a base positioned on a front surface of the lens;
a main body of a jewel fixed on the base; and
a part held by a magnetic force generated between the base and the part at a position relative to the base, the part positioned on a rear surface of the lens.

2. The jewelry article as set forth in claim 1,
wherein the base has a cylindrical shape including a rim and an orifice, and prong settings are installed along the rim of the base;
the main body of the jewel is shaped like an approximately triangular pyramid and includes a point held in midair a through the orifice of the base; and
a bottom surface of an outer circumference of the main body of the jewel is held by the prong settings in the base.

3. The jewelry article as set forth in claim 1,
wherein the base has a cylindrical shape including a rim and an orifice, and prong settings are installed along the rim of the orifice of the base;
a ring shaped permanent magnet formed inside of a bottom of the base;
the main body of the jewel is shaped like an approximately triangular pyramid and includes a point positioned in a midair on the permanent magnet; and
a bottom surface of an outer circumference of the main body of the jewel is held by the prong settings in the base.

4. The jewelry article as set forth in claim 1,
wherein a permanent magnet installed in each of the base and the part, and are mutually attracted by the magnetic force.

5. The jewelry article as set forth in claim 1,
wherein either one of the base or the part includes a permanent magnet; and the other includes a ferromagnetic.

6. The jewelry article as set forth in claim 1,
wherein the part has an adhesive layer to position the part on a rear side of the lens at a position relative to the base.

7. The jewelry article as set forth in claim 1,
further comprising a plurality of bases, each held on the front surface of the lens by a magnetic force generated between the singular part and the plurality of bases.

8. The jewelry article as set forth in claim 1,
wherein an outside of the bottom surface of the base is curved.

9. A jewel-installation tool for mounting jewelry on a lens of eyeglasses, comprising:
a base to be positioned on a front surface of the lens and to fix the main body of a jewel; and
a part held by a magnetic force generated between the base and the part at a position relative to the base, on the part positioned a rear surface of the lens.
